# EUROPEAN PATENT SPECIFICATION

(11) **EP 1 971 453 B1**
(45) Date of publication and mention of the grant of the patent: **17.05.2017**
(21) Application number: 07716255.0
(22) Date of filing: 04.01.2007
(51) Int. Cl.: B22F 5/00, F16C 9/02, F16C 33/14, F16C 7/02

(54) **PRECISION LOCATION AND LOW FORCE REPOSITIONING OF POWDER METAL COMPONENTS**
PRÄZISIONSREPOSITIONIERUNG MIT GERINGER KRAFT VON PULVERMETALLKOMPONENTEN
LOCALISATION PRECISE ET REPOSITIONNEMENT AVEC FAIBLES EFFORTS DE COMPOSANTS EN POUDRE METALLIQUE

(30) Priority: 06.01.2006 US 756713 P
(43) Date of publication of application: 24.09.2008
(73) Proprietor: GKN Sinter Metals Inc., Germantown, WI 53022 (US)
(72) Inventor: DONALDSON, Ian, W., Jefferson, MA 01522-1151 (US); MANDEL, Joel, H., Hartford, WI 53027 (US); BUTLER, Peter, C., Colgage, WI 53017 (US)
(74) Representative: KNH Patentanwälte
(86) International application number: PCT/US2007/000095
(87) International publication number: WO 2007/081715

(56) References cited:
- US-A- 6 017 151
- US-A1- 2002 170 161

## Description

### CROSS-REFERENCE TO RELATED APPLICATIONS

This claims the benefit of U.S. Provisional Patent Application No. 60/756,713 filed January 6, 2006.

### STATEMENT REGARDING FEDERALLY SPONSORED RESEARCH OR DEVELOPMENT

Not applicable.

### FIELD OF THE INVENTION

This invention relates to powder metal components, and in particular to bearing caps like main bearing caps, connecting rod and other bolt on caps that define approximately half of a circle in which a bearing is received, as are common in applications like engines and other machines. In particular, this invention relates to a sintered powder metal bearing cap having bosses that protrude around the bolt holes of the cap and extend into a counterbore in the structure to which the cap is assembled.

### BACKGROUND OF THE INVENTION

US Patent No. 6,086,258 and US 2002 170161 describe a precisely repositionable bearing cap having bosses that extend from feet of the bearing cap into counterbores of the structure to which the bearing cap is assembled. The bearing cap is first pressed with the bosses extending into the counterbores, with deformation occurring between the bosses and the counterbores. The bearing cap and structure are then machined in the area of the bearing hole they together form and then are separated to permit assembling the bearing and the shaft that is journaled by the bearing. Then, the bearing cap is reassembled to the structure, with the deformations caused by pressing the bearing cap into the structure assuring that the bearing cap and structure are mated up to one another in precisely the same position in which they were machined.

Patent 6,086,258 discloses a number of different structures of the boss, including a boss with an outer circular surface, with narrow ribs or splines or triangular ribs spaced about the periphery of the boss. These structures, when pressed into the counterbores of the foundation or assembly structure, can require a large force to press the bearing cap into the receiving structure, and, after machining, another large force to separate the two parts. The forces can be so great as to make manufacture impractical or to reduce the chances of precise reassembly when the two parts are put back together after machining. Accordingly, improvements to bearing caps with re-assembly positioning bosses are needed.

### SUMMARY OF THE INVENTION

The invention provides a bearing cap of the type that is bolted to a bearing support structure so as to define a bearing bore between the cap and the structure and in which bolt holes for securing the cap to the structure extend through feet of the cap and into the structure. The cap has at least two of the feet, one of the feet on each side of the bore with at least one bolt hole extending through each foot. The cap is sintered powder metal and has an integral boss protruding from each foot around the bolt hole in the foot. In the invention, each boss has multiple lobes extending radially from an exterior surface of the boss, with one of the bosses having two of the lobes and the other of the bosses having more than two of the lobes. This configuration facilitates a lower force initial insertion of the bosses into the counterbores and subsequent extraction.

In a preferred form, the two lobes on the one boss are 180° apart and are oriented such that they are intersected by a plane that is parallel to a longitudinal axis of the bearing bore. As such, the two lobes function to locate the foot on which they are placed relative to the counterbore, but permit a greater range of possible spacings of the foot from the other foot to ease the manufacturing tolerances that are applicable to the bearing cap.

In addition, in this aspect, the four or more lobes on the other boss can be positioned at 45 degrees to further ease the manufacturing tolerances on the center to center distances of bosses of the bearing cap and the counterbores in the support structure. In addition, when positioned at 45 degrees, the lobes are pressed into the counterbores at thicker sections of the support structure so the cap fit into the counterbores is tighter. Also in this position, no lobe is in line with an oil groove in the bearing bore of the cap.

In another aspect, the interference fit between the boss and the counterbore is in the range of 25 to 300 microns. This range of interference fit is most preferable to provide reasonable insertion and extraction forces.

In another aspect, in a bearing cap having bosses that are pressed into counterbores of an assembly structure or foundation, neither lobe should have more than 10 bosses on it, and preferably there should be two on one, and four to ten on the other. In combination with this aspect, it is preferable that each lobe extend circumferentially for 10 to 30°. It is also preferred that each lobe taper from 5 to 25°. Typically the counterbore hole will not taper but will have a straight cut side wall.

In another aspect, each lobe can be provided with a compound radius that reduces the contact area between the lobe and the counterbore to line contact that decreases in width as the boss is pressed further into the counterbore. At the free end, the lobe can have a relatively large radius that decreases as the base of the lobe is approached.

These and other objects and advantages of the invention will be apparent from the detailed description and drawings.

### BRIEF DESCRIPTION OF THE DRAWINGS

Fig. 1 is a side plan view of a bearing cap incorporating the invention;
Fig. 2 is a side plan fragmentary view of an assembly structure having bolt holes and counterbores around the bolt holes for receiving the bosses of the bearing cap of Fig. 1;
Fig. 3 is an end plan view of the bearing cap of Fig. 1;
Fig. 4 is a detail end plan view shown fragmentary of the right foot of Fig. 3;
Fig. 5 is a detail end plan view of the left foot of Fig. 3;
Fig. 6 is a side plan detail view of the left foot of Fig. 5;
Fig. 7 is a cross-sectional view through the counterbores and bosses illustrating how the bosses fit in the counterbores;
Fig. 8 is a perspective view of a lobe of an alternative shape that goes from being rounded in shape at its free end to pointed at its base end; and
Fig. 9 is a view of an alternative 45 degree orientation of a four lobe boss.

### DETAILED DESCRIPTION OF THE PREFERRED EMBODIMENT

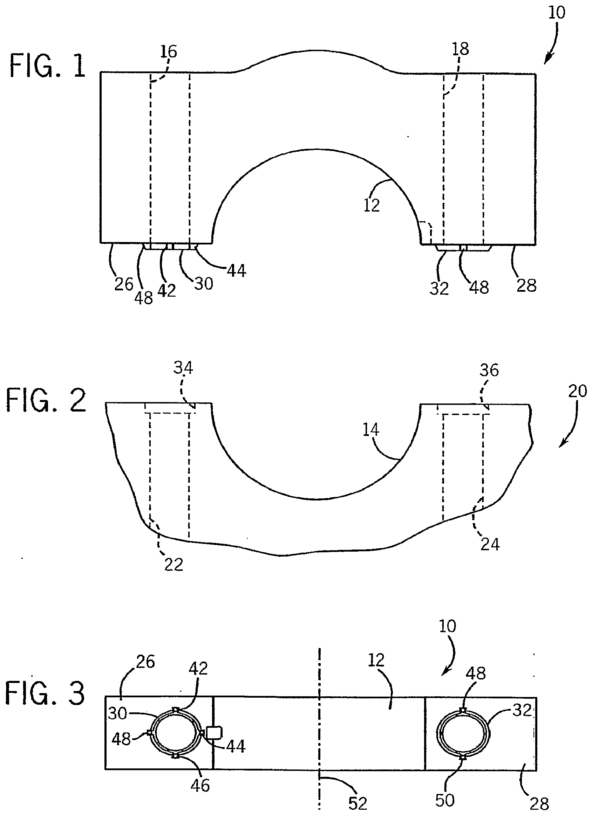

Referring to Fig. 1, a bearing cap 10 is illustrated and Fig. 2 illustrates a portion of the support structure 20 to which the bearing cap 10 is assembled. Together, the bearing cap 10 and structure 20 define a bearing bore, with bearing bore half 12 in the cap 10 and bearing bore half 14 in the structure 20. Bore half 12 has an oil groove 13 on one side. Bolt holes 16 and 18 extend through the bearing cap 10 and bolt holes 22 and 24 extend in the structure 20. The bolt holes 16 and 18 are positioned through feet 26 and 28 of the cap 10 with one of the feet on each side of the bore half 12. The cap 10 is sintered powder metal and each foot 26 and 28 has a respective boss 30 and 32 extending from its face that faces the structure 20. The boss 30 is received in a counterbore 34 of the structure 20 and boss 32 is received in a counterbore 36 of the structure 20.

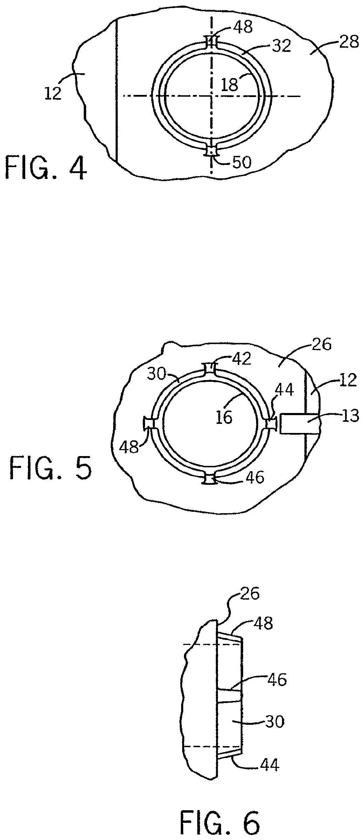

Referring to Figs. 3-6, the boss 30 has four lobes 40, 42, 44 and 46 spaced at 90° intervals and the boss 32 has two lobes 48 and 50 spaced 180° from one another. In the embodiment of Figs. 3-6, each of the two bosses has two lobes oriented relative to the bearing caps such that they are intersected by a plane that is parallel to the longitudinal axis 52 of the bearing bore 12. For the boss 30, these are the lobes 42 and 46, and for the boss 32 they are the lobes 48 and 50, which are the only lobes on the boss 32. The other two lobes 44 and 48 on the boss 30 are intersected by a plane that is perpendicular to the axis 52. There are preferably 4 to 10 lobes on one of the bosses and only two lobes on the other boss. Preferably, the lobes are located on the bosses so that at each position where there is a lobe, there is another lobe 180° apart from it. This is preferred to make measurement of the effective diameter between the outer surfaces of the opposing lobes easier.

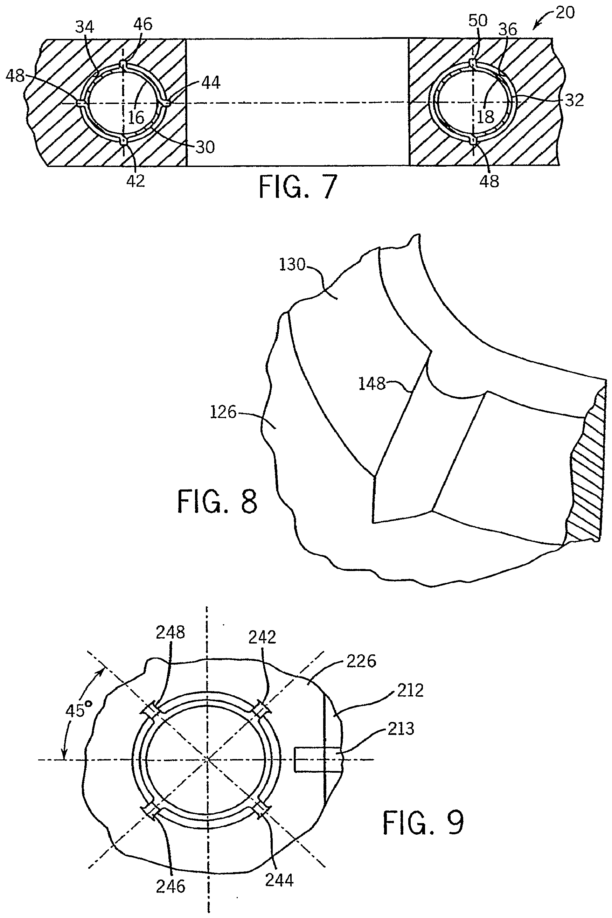

Fig. 9 illustrates a further improvement to the orientation of the lobes 42, 44, 46 and 48 on the boss 30. In this embodiment, the four lobes 242, 244, 246 and 248 on boss 230 of foot 226 have an orientation that is rotated 45 degrees from the orientation of the first embodiment of Figs. 1-7. Thus, the four lobes 242, 244, 246 and 248 on boss 230 have an orientation such that the axes through them are rotated 45 degrees from the lateral and longitudinal axes of the bearing cap. The two lobes on the other boss are oriented the same as in the first embodiment. The four lobes 242, 244, 246 and 248 on the boss 230 in the 45 degree orientation further ease the manufacturing tolerances on the center to center distances of the bosses of the bearing cap and the counterbores in the support structure. In addition, when positioned at 45 degrees, the lobes 242, 244, 246 and 248 are pressed into the counterbores at thicker sections of the support structure so the cap fit into the counterbores is less dependent on stresses in the support structure. Also in this position, no lobe is in line with the oil groove 213 in the bearing bore 212 of the cap.

As can be seen, each lobe protrudes slightly radially from the adjacent surface of the boss, that is, the adjacent surface is the surface that is between bosses. Only the lobes contact and interfere with the respective counterbores 34 and 36. Preferably, each lobe has a circumferential extent such that it subtends an arc of 10 to 30°. In this range, the lobes will deform the counterbores and/or deform themselves enough to be precisely repositionable without requiring impractical or excessive forces to initially seat them or extricate them. Also, each lobe preferably tapers from its base toward the axis of the adjacent bolt hole in an angle range of from 5 to 25°, so that it can enter a counterbore and as it is pushed further into the counterbore then begins to interfere with the counterbore. The adjacent surfaces of the bosses may taper a similar amount. In addition, as illustrated in Fig. 8, the lobes can be formed so that the outer surface of the lobe has a compound radius that reduces the contact area on the lobe with the counterbore to line contact as the lobe is pushed further into the counterbore. As illustrated in Fig. 8, the radius of the outer surface of the lobe 148 of the boss 130 on foot 126 changes from being rounded at its free end to being pointed at its end near the base of the boss 148.

So as to have an appropriate force necessary to seat a bearing cap on the assembly structure and a desirable force to extricate the bearing cap from the structure after machining, it is preferred that the interference fit between the bosses and the counterbores is in the range of 25 to 300 microns on the effective diameters. That is to say, that the effective diameter of each boss is in the range of 25 to 300 microns bigger than the diameter of the counterbore in which it fits. For example, to obtain the effective diameter of the boss, it would typically be equal to 2.5 to 3 millimeters greater than the bolt hole 16 or 18 diameter. The lobes typically stick out from the surrounding surfaces of the bosses approximately at least 0.25 millimeters. The height of the boss is typically about 1.0 millimeters. For the counterbore interference on the diameter, the nominal interference may typically be 150 microns. This is the interference at the base of the boss to yield desirable pressing and extraction forces, while achieving the precise location benefits of the invention.

The bearing cap is powder metal and could be made by a conventional sintered powder metal process or by another powder metal process such as powder metal injection molding. The materials may vary significantly, depending upon many factors including the material of the assembly structure 20. If the assembly structure is relatively soft material, such as cast aluminum or wrought aluminum, generally higher strength powder metal material may be used. For example, if the assembly structure 20 is a cast aluminum silicon copper alloy 319 for example, having an ultimate tensile strength of approximately 34,000 psi and a yield strength of approximately 19,000 psi, the bearing cap could be of a variety of sintered powder metal materials at various densities such as FC-0205-40, which has an ultimate tensile strength of 50,000 psi and a yield strength of 45,000 psi at a density of 6.7 grams per cubic centimeter. Alternatively, a sinter hardened or heat treated powder metal material such as FLC-4608-70HT, which has an ultimate tensile strength of 80,000 psi could be used. If the assembly structure 20 is a hard mating material such as cast iron, generally any powder metal material that has a lower compressive yield strength either through composition or density may be used. For example, if the structure 20 is ductile cast iron 80-55-06 having an ultimate tensile strength of 80,000 psi and a yield strength of 55,000 psi, the bearing cap could be a powder metal aluminum 2014T6 grade at a 2.6 grams per cubic centimeter density having an ultimate tensile strength of 48,000 psi and a yield strength of 46,000 psi or softer. Another mating material for the bearing cap could be a FC-0205-35 powder metal material at a 6.3 grams per cubic centimeter density having an ultimate tensile strength and yield strength of 40,000 psi. Many other powder metal materials could be used for the bearing cap.

Preferred embodiments of the invention have been described in considerable detail. Many modifications and variations to the preferred embodiments described will be apparent to those of ordinary skill in the art. Therefore, the invention should not be limited to the embodiments described, but should be defined by the claims which follow.

## Claims

1. Bearing support structure with a bearing cap (10) of the type which is bolted to a bearing support structure (20) so as to define a bearing bore (12, 14) between said cap (10) and said structure (20) and in which bolt holes (16, 18) for securing said cap (10) to said structure (20) extend through feet (26, 28) of said cap (10) and into said structure (20), said cap (10) having at least two of said feet (26, 28), one said foot (26, 28) on each side of said bore (12, 14) with at least one bolt hole (16, 18) extending through each said foot (26, 28), wherein said cap (10) is sintered powder metal and has an integral boss (30, 32) protruding from each said foot (26, 28) around the bolt hole (16, 18) in said foot (26, wherein:
each said boss (30, 32) has multiple lobes (42, 44, 46, 48, 50, 242, 244, 246, 248) extending radially from an exterior surface of the boss (30, 32), **Characterised in that**:
one of said bosses (32) having two said lobes (48, 50) 180 degrees apart and oriented relative to the bearing cap (10) such that they are intersected by a plane that is parallel to a longitudinal axis (52) of the bearing bore (12, 14) and the others of said bosses (30) having four lobes (42, 44, 46, 48) made up of two pairs of lobes with the lobes of each pair 180 degrees apart such that the lobes of each pair are aligned along a respective axis.

2. Bearing support structure with a bearing cap (10) as in claim 1, further comprising a support structure (20) having holes (22, 24) with counterbores (34, 36) for receiving the bosses (30, 32) with an interference fit between the boss (30, 32) and the counterbore (34, 36), and wherein the interference fit between the bosses (30, 32) and the counterbores (34, 36) is in the range of 25 to 300 microns.

3. Bearing support structure with a bearing cap (10) as in claim 1, wherein each lobe (42, 44, 46, 48, 50, 242, 244, 246, 248) subtends an angle of 10-30 degrees having its vertex at the axis of the bolt hole (16, 18) through the foot (26, 28) that the lobe (42, 44, 46, 48, 50, 242, 244, 246, 248) is on.

4. Bearing support structure with a bearing cap (10) as in claim 1, wherein each lobe (42, 44, 46, 48, 50, 242, 244, 246, 248) tapers from 5-25 degrees radially inwardly in the direction from a base of the boss (30, 32) to a free end of the boss (30, 32).

5. Bearing support structure with a bearing cap (10) as in claim 1, wherein there is a compound radius on the lobe (42, 44, 46, 48, 50, 242, 244, 246, 248) that reduces a width of contact between the lobe (42, 44, 46, 48, 50, 242, 244, 246, 248) and the counterbore (34, 36) toward the base of the lobe (42, 44, 46, 48, 50, 242, 244, 246, 248).

6. Bearing support structure with a bearing cap (10) as in claim 1, wherein the lobes (42, 44, 46, 48, 50, 242, 244, 246, 248) on the bosses (30, 32) are not aligned with a lateral axis of the bearing cap (10).

7. Bearing support structure with a bearing cap (10) as in claim 1, wherein the pairs of lobes (42, 44, 46, 242, 244, 246, 248) are oriented on the boss (30) such that their axes are 45 degrees to the longitudinal axis (52) of the bearing bore (12, 14).

## Patentansprüche

1. Lager-Stütz-Struktur mit einem Lagerdeckel (10), der an eine Lager-Stütz-Struktur (20) anschraubbar ist, so dass eine Lagerbohrung (12, 14) durch den Deckel (10) und die Struktur (20) definiert ist und wobei sich Schraublöcher (16, 18) zur Befestigung des Deckels (10) an der Struktur (20) durch Füße (26, 28) des Deckels (10) in die Struktur (20) erstrecken, der Deckel (10) hat mindestens zwei dieser Füße (26, 28), jeweils einen Fuß (26, 28) auf jeder Seite der Lagerbohrung (12, 14) mit mindestens einem sich durch jeden Fuß (26, 28) erstreckenden Schraubloch (16, 18), wobei der Lagerdeckel (10) sintermetallisch ist und an jedem Fuß (26, 28) einen sich um das Schraubloch des Fußes (26, 28) ersteckenden, angeformten Vorsprung (30, 32) hat; wobei:
jeder der Vorsprünge (30, 32) mehrere Nocken (42, 44, 46, 48, 50, 242, 244, 246, 248) hat, die sich radial ausgehend von einer Außenfläche des Vorsprungs (30, 32) erstrecken, **dadurch gekennzeichnet, dass**:
einer der Vorsprünge (32) zwei der Nocken (48, 50) hat, die 180 Grad auseinanderliegen und so zu dem Lagerdeckel (10) orientiert sind, dass sie von einer, zu einer Längsachse (52) der Lagerbohrung (12, 14) parallelen Ebene geschnitten werden und die anderen der Vorsprünge (30) vier Nocken (42, 44, 46, 48) haben, die durch zwei Paare von Nocken gebildet sind, wobei die Nocken jedes Paares 180 Grad auseinanderliegen, so dass die Nocken jedes Paares zu einer jeweiligen Achse ausgerichtet sind.

2. Lager-Stütz-Struktur mit einem Lagerdeckel (10) nach Anspruch 1, wobei weiter eine Stütz-Struktur (20) vorgesehen ist, die Löcher (22, 24) mit Aufnahmebohrungen (34, 36) zur Aufnahme der Vorsprünge (30, 32) unter Ausbildung einer Presspassung zwischen dem Vorsprung (30, 32) und der Aufnahmebohrung (34, 36) aufweist, und wobei die Presspassung zwischen den Vorsprüngen (30, 32) und den Aufnahmebohrungen (34, 36) im Bereich zwischen 25 bis 300 Mikrometer liegt.

3. Lager-Stütz-Struktur mit einem Lagerdeckel (10) nach Anspruch 1, wobei jeder Nocken (42, 44, 46, 48, 50, 242, 244, 246, 248) sich über einen Winkel von 10 bis 30 Grad erstreckt, dessen Scheitelpunkt auf der Achse des Schraubloches (16, 18) liegt, dass sich durch den Fuß (26, 28) erstreckt, an dem der Nocken (42, 44, 46, 48, 50, 242, 244, 246, 248) angeordnet ist.

4. Lager-Stütz-Struktur mit einem Lagerdeckel (10) nach Anspruch 1, wobei sich jeder Nocken (42, 44, 46, 48, 50, 242, 244, 246, 248), ausgehend von einer Grundfläche des Vorsprungs (30, 32) hin zu einem freien Ende des Vorsprungs (30, 32), unter einem radial nach innen gerichteten Winkel von 5 bis 25 Grad geneigt erstreckt.

5. Lager-Stütz-Struktur mit einem Lagerdeckel (10) nach Anspruch 1, wobei an dem Nocken (42, 44, 46, 48, 50, 242, 244, 246, 248) ein veränderlicher Radius vorliegt, der hin zu der Grundfläche des Nockens (42, 44, 46, 48, 50, 242, 244, 246, 248) eine Breite eines Kontakts zwischen der Nocke (42, 44, 46, 48, 50, 242, 244, 246, 248) und der Aufnahmebohrung (34, 36) reduziert.

6. Lager-Stütz-Struktur mit einem Lagerdeckel (10) nach Anspruch 1, wobei die Nocken (42, 44, 46, 48, 50, 242, 244, 246, 248) an den Vorsprüngen (30, 32) nicht zu einer Querachse des Lagerdeckels (10) ausgerichtet sind.

7. Lager-Stütz-Struktur mit einem Lagerdeckel (10) nach Patentanspruch 1, wobei die Paare von Nocken (42, 44, 46, 48, 50, 242, 244, 246, 248) so an Achsen auf dem Vorsprung (30) angeordnet sind, die jeweils einen Winkel von 45 Grad zu der Längsachse (52) der Lagerbohrung (12, 14) aufweisen.

## Revendications

1. Structure de support de palier avec un chapeau de palier (10) du type qui est boulonné à une structure de support de palier (20) de façon à définir un alésage de palier (12, 14) entre ledit chapeau (10) et ladite structure (20) et dans laquelle des trous de boulon (16, 18) pour la fixation dudit chapeau (10) à ladite structure (20) s'étendent à travers des pieds (26, 28) dudit chapeau (10) et dans ladite structure (20) de part et d'autre dudit alésage (12, 14) avec au moins un trou de boulon (16, 18) s'étendant à travers chacun desdits pieds (26, 28), dans laquelle ledit chapeau (10) est en poudre métallique frittée et présente une bosse intégrale (30, 32) saillante à partir de chacun desdits pieds (26, 28) autour du trou de boulon (16, 18) dans ledit pied (26, 28), dans lequel chacune desdites bosses (30, 32) présente plusieurs lobes (42, 44, 46, 48, 50, 242, 244, 246, 248) s'étendant radialement à partir d'une surface extérieure de la bosse (30, 32),
**caractérisée en ce qu'**une desdites bosses (32) présente deux desdits lobes (48, 50) espacés l'un de l'autre de 180 degrés et orientés par rapport au chapeau de palier (10) de telle manière qu'ils soient coupés par un plan qui est parallèle à un axe longitudinal (52) de l'alésage de palier (12, 14) et **en ce que** les autres desdites bosses (30) présentent quatre lobes (42, 44, 46, 48) composés de deux paires de lobes où les lobes de chaque paire sont espacés l'un de l'autre de 180 degrés de telle manière que les lobes de chaque paire soient alignés le long d'un axe respectif.

2. Structure de support de palier avec un chapeau de palier (10) selon la revendication 1, comprenant en outre une structure de support (20) comportant des trous (22, 24) avec des suralésages (34, 36) destinés à recevoir les bosses (30, 32) avec un ajustement avec serrage entre la bosse (30, 32) et le suralésage (34, 36), et dans laquelle l'ajustement avec serrage entre les bosses (30, 32) et les suralésages (34, 36) se situe dans la plage de 25 à 300 microns.

3. Structure de support de palier avec un chapeau de palier (10) selon la revendication 1, dans laquelle chaque lobe (42, 44, 46, 48, 50, 242, 244, 246, 248) sous-tend un angle de 10 - 30 degrés dont le sommet est situé sur l'axe du trou de boulon (16, 18) à travers le pied (26, 28) sur lequel se trouve le lobe (42, 44, 46, 48, 50, 242, 244, 246, 248).

4. Structure de support de palier avec un chapeau de palier (10) selon la revendication 1, dans laquelle chaque lobe (42, 44, 46, 48, 50, 242, 244, 246, 248) se réduit de 5 - 25 degrés radialement vers l'intérieur dans la direction partant d'une base de la bosse (30, 32) jusqu'à une extrémité libre de la bosse (30, 32).

5. Structure de support de palier avec un chapeau de palier (10) selon la revendication 1, dans laquelle il existe un rayon composé sur le lobe (42, 44, 46, 48, 50, 242, 244, 246, 248) qui diminue une largeur de contact entre le lobe (42, 44, 46, 48, 50, 242, 244, 246, 248) et le suralésage (34, 36) en direction de la base du lobe (42, 44, 46, 48, 50, 242, 244, 246, 248).

6. Structure de support de palier avec un chapeau de palier (10) selon la revendication 1, dans laquelle les lobes (42, 44, 46, 48, 50, 242, 244, 246, 248) sur les bosses (30, 32) ne sont pas alignés avec un axe latéral du chapeau de palier (10).

7. Structure de support de palier avec un chapeau de palier (10) selon la revendication 1, dans laquelle les paires de lobes (42, 44, 46, 242, 244, 246, 248) sont orients sur la bosse (30) de telle manière que leurs axes soient situés à 45 degrés de l'axe longitudinal (52) de l'alésage de palier (12, 14).
